(19) Europäisches Patentamt / European Patent Office / Office européen des brevets

(11) **EP 2 824 804 A1**

(12) **EUROPÄISCHE PATENTANMELDUNG**

(43) Veröffentlichungstag:
14.01.2015  Patentblatt 2015/03

(51) Int Cl.:
*H02K 5/173* *(2006.01)*      *H02K 5/20* *(2006.01)*
*H02K 5/24* *(2006.01)*

(21) Anmeldenummer: 13176314.6

(22) Anmeldetag: **12.07.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft 80333 München (DE)**

(72) Erfinder: **Schunk, Holger 97461 Lendershausen (DE)**

(54)    **Hochdrehende elektrische Maschine**

(57)    Eine elektrische Maschine (1) weist einen Rotor (2) auf, der drehfest auf einer Rotorwelle (3) angeordnet ist. Die Rotorwelle (3) ist in Wälzlagern (4) gelagert, so dass sie um eine Rotationsachse (5) rotierbar ist. Der Rotor (2) ist radial außen von einem Stator (6) der elektrischen Maschine umgeben. Die Wälzlager (4) sind gegenüber statorfest angeordneten Lagerschilden (9) mittels elastischer Zwischenelemente (10,11) axial und radial elastisch vorgespannt.

FIG 1

**Beschreibung**

Die vorliegende Erfindung betrifft eine elektrische Maschine,

- wobei die elektrische Maschine einen Rotor aufweist, der drehfest auf einer Rotorwelle angeordnet ist,
- wobei die Rotorwelle in Wälzlagern gelagert ist, so dass die Rotorwelle um eine Rotationsachse rotierbar ist,
- wobei der Rotor, bezogen auf die Rotationsachse, radial außen von einem Stator der elektrischen Maschine umgeben ist.

Die vorliegende Erfindung betrifft weiterhin eine kombinierte Turbinen-Generator-Einheit,

- wobei die Turbinen-Generator-Einheit eine Gasturbine mit einer Turbinenwelle und eine elektrische Maschine aufweist,
- wobei die Turbinenwelle direkt mit der Rotorwelle der elektrischen Maschine drehfest verbunden ist, so dass die Turbinenwelle und die Rotorwelle stets mit derselben Drehzahl rotieren.

Eine derartige elektrische Maschine ist allgemein bekannt. Insbesondere ist nahezu jede Innenläufermaschine derart aufgebaut.

Für die Energieerzeugung in Flugzeugen werden im Stand der Technik oftmals Gasturbinen verwendet. Die Gasturbinen arbeiten nur dann energieeffizient, wenn sie im Bereich ihrer Nennleistung und damit im Bereich ihrer Nenndrehzahl betrieben werden. Die Nennleistung wird in der Regel nur in ganz wenigen Flugphasen benötigt, insbesondere beim Start. Es ist daher möglich, den Gesamtwirkungsgrad dadurch zu verbessern, dass eine Gasturbine einen Generator antreibt. Die dadurch erzeugte elektrische Energie kann verteilt und zu Elektromotoren geführt werden, welche ihrerseits Propeller antreiben.

Die Nenndrehzahl von Gasturbinen variiert je nach Größe der Gasturbine zwischen wenigen 1000 Umdrehungen/min bis weit über 30000 Umdrehungen/min. Teilweise werden Nenndrehzahl bis zu 55000 Umdrehungen/min erreicht. Elektrische Maschinen für diesen Drehzahlbereich (30000 Umdrehungen/min und mehr) sind zwar als Antriebe für zahnärztliche Instrumente bekannt. Derartige elektrische Maschinen werden jedoch als elektrische Motoren mit einer geringen Leistungsaufnahme (wenige Watt) - so genannte Mikromotoren - betrieben. Eine einfache Skalierung einer derartigen elektrischen Maschine in den Leistungsbereich (Nennleistung etliche Kilowatt oder sogar über ein Megawatt) ist jedoch nicht möglich. Das größte Problem besteht darin, dass die elektrische Maschine oberhalb einiger Eigenfrequenzen des Systems betrieben werden muss, so dass angeregte Eigenschwingungen wirksam gedämpft werden müssen.

Die Aufgabe der vorliegenden Erfindung besteht darin, eine elektrische Maschine für den Leistungsbereich zu schaffen, welche mit extrem hohen Drehzahlen betreibbar ist.

Die Aufgabe wird durch eine elektrische Maschine mit den Merkmalen des Anspruchs 1 gelöst. Vorteilhafte Ausgestaltungen der elektrischen Maschine sind Gegenstand der abhängigen Ansprüche 2 bis 21.

Erfindungsgemäß sind bei einer elektrischen Maschine der eingangs genannten Art die Wälzlager gegenüber statorfest angeordneten Lagerschilden, bezogen auf die Rotationsachse, mittels elastischer Zwischenelemente axial und radial elastisch vorgespannt.

In einer bevorzugten Ausgestaltung der elektrischen Maschine sind zwischen den Wälzlagern und den Lagerschilden Lagerbuchsen angeordnet und sind die elastischen Zwischenelemente zwischen den Lagerbuchsen und den Lagerschilden angeordnet. Dadurch kann die elastische Vorspannung auf besonders einfache und zuverlässige Weise erreicht werden.

Vorzugsweise sind die Wälzlager jeweils mittels mehrerer elastischer Zwischenelemente radial elastisch vorgespannt und jeweils mittels mindestens eines elastischen Zwischenelements axial elastisch vorgespannt. Diese Ausgestaltung hat sich in Versuchen als besonders leistungsfähig erwiesen.

In einer weiter bevorzugten Ausgestaltung weist die Rotorwelle im Bereich des Rotors einen ersten Wellendurchmesser auf und verjüngt sich zu den Wälzlagern hin in Übergangsabschnitten auf einen zweiten Wellendurchmesser. Dadurch kann die Leistungsausbeute der elektrischen Maschine trotz relativ niedriger Abrollgeschwindigkeiten der Wälzelemente in den Wälzlagern relativ hoch sein.

Wie bei jeder elektrischen Maschine ist im Stator eine Statorwicklung angeordnet, die axial beidseitig des Stators je einen über den Stator hinausragenden Wicklungskopf aufweist. Vorzugsweise sind die Übergangsabschnitte im Bereich der Wicklungsköpfe angeordnet. Dadurch kann - in Richtung der Rotationsachse gesehen - bei im übrigen gleicher Dimensionierung der elektrischen Maschine der Abstand der Wälzlager voneinander reduziert werden. Durch diese Ausgestaltung kann eine Neigung zu Eigenschwingungen reduziert werden und können Eigenfrequenzen angehoben werden. Insbesondere ist es sogar möglich, dass die Wälzlager im Bereich der Wicklungsköpfe angeordnet sind. Diese Ausgestaltung bewirkt eine besonders große Reduzierung des Abstands der Wälzlager voneinander.

Bei Kupplung der Rotorwelle mit einer Antriebswelle - beispielsweise einer Turbinenwelle einer Turbine - muss damit gerechnet werden, dass ein radialer Versatz und/oder ein Winkelversatz zwischen der Antriebswelle und der Rotorwelle auftritt. Ein derartiger Versatz kann zu radialen Schwingungen und Taumelbewegungen der Rotorwelle führen. Im Extremfall können die angeregten Schwingungen so stark sein, dass die Gefahr einer Berührung des Stators durch den Rotor besteht. In einem derartigen Fall würde die elektrische Maschine zerstört werden. Um eine derartige Gefahr auszuschließen, sind vorzugsweise in den Lagerschilden zusätzlich zu den Wälzlagern Fanglager angeordnet, die bezüglich der Lagerschilde zumindest radial inelastisch angeordnet sind. Die Fanglager begrenzen eine Verkippung und einen Versatz der Rotorwelle auf einen jeweiligen Maximalwert. Die Fanglager sind derart ausgelegt, dass der Rotor auch bei der maximalen Verkippung und auch bei dem maximalen Versatz vom Stator beabstandet bleibt.

Die Fanglager sind, sofern sie vorhanden sind, in Fanglagerhalterungen angeordnet. Vorzugsweise sind die Wälzlager gegen die - in den Lagerschilden inelastisch und ortsfest gehaltenen - Fanglagerhalterungen axial vorgespannt.

Die elastische Vorspannung der Wälzlager ist vorzugsweise derart bestimmt, dass - bezogen auf eine Schwingungsperiode einer axialen und/oder radialen Schwingung - eine Dämpfung von mindestens 0,15 erreicht wird. Dadurch können Schwingungen effizient gedämpft werden. Vorzugsweise beträgt die Dämpfung sogar mindestens 0,20, insbesondere mindestens 0,25.

Der Rotor weist einen Außendurchmesser und einer Länge auf. Ein Verhältnis der Länge zum Außendurchmesser beträgt vorzugsweise mindestens 3:1. Durch diese Ausgestaltung kann die Leistungsausbeute der elektrischen Maschine maximiert werden.

Der Rotor umfasst, wie allgemein üblich, ein Rotorblechpaket, das aus einer Vielzahl von axial zur Rotationsachse aufeinander gestapelten, kreisringförmig ausgebildeten Rotorblechen besteht. Das Rotorblechpaket weist radial zur Rotationsachse gesehen eine Radialerstreckung auf. Zur Minimierung von Wirbelstromverlusten liegt die Radialerstreckung des Rotorblechpakets vorzugsweise zwischen 5% und 10% eines ersten Wellendurchmessers, welchen die Rotorwelle im Bereich des Rotorblechpakets aufweist. Bei einem ersten Wellendurchmesser von beispielsweise 70 mm kann die Radialerstreckung beispielsweise bei ca. 5 mm liegen. Alternativ oder zusätzlich zur Radialerstreckung des Rotorblechpakets weisen die Rotorbleche in Richtung der Rotationsachse gesehen eine Dicke von maximal 0,25 mm auf, beispielsweise eine Dicke von maximal 0,20 mm, insbesondere von maximal 0,15 mm.

Das Rotorblechpaket wird üblicherweise auf die Rotorwelle aufgeschrumpft. Um diesen Vorgang effizient ausführen zu können, weist die Rotorwelle vorzugsweise einen Vorsprung auf, der an einem Ende des Rotors axial an das Rotorblechpaket angrenzt. Am anderen Ende des Rotors weist die Rotorwelle hingegen keinen derartigen Vorsprung auf. Dadurch ist es möglich, das Rotorblechpaket rasch bis zum Vorsprung auf die Rotorwelle aufzuschieben und dann (insbesondere durch Abkühlen) auf die Rotorwelle aufschrumpfen zu lassen. Der Vorsprung kann insbesondere ringförmig um die Rotorwelle umlaufen.

Die elektrische Maschine ist vorzugsweise als permanent erregte elektrische Synchronmaschine ausgebildet. Auf der radialen Außenseite des Rotorblechpakets sind daher Permanentmagnete angeordnet. Vorzugsweise weist der Rotor aus Stabilitätsgründen eine das Rotorblechpaket und die Permanentmagnete radial außen umgebende Hülle aus einem faserverstärkten Kunststoff auf. Als faserverstärkter Kunststoff kommen insbesondere ein glasfaserverstärkter Kunststoff und ein kohlefaserverstärkter Kunststoff infrage. Eine radiale Dicke der Hülle liegt in der Regel im Bereich weniger Millimeter.

Um die hohen Drehzahlen dauerhaft zu verkraften, muss eine Temperaturdifferenz zwischen den Lagerinnenringen und den Lageraußenringen relativ niedrig gehalten werden. Vorzugsweise wird daher den Wälzlagern über eine jeweilige Zuleitung zur Schmierung und/oder Kühlung der Wälzlager ein Öl-Luft-Gemisch zugeführt wird. Derartige Öl-Luft-Gemische können insbesondere in Form einer sogenannten Sprühnebelkühlung realisiert sein.

Zur effizienten Kühlung der elektrischen Maschine - insbesondere der Wicklungsköpfe der Statorwicklung und des Stators - ist vorzugsweise vorgesehen,

- dass die Lagerschilde Öffnungen aufweisen, durch die hindurch Kühlluft von außen in einen jeweiligen Zwischenraum zwischen dem jeweiligen Lagerschild und dem Stator geblasen wird, und
- dass der Stator axial zur Rotationsachse verlaufende jeweilige Kanäle aufweist, durch die hindurch die in den jeweiligen Zwischenraum geblasene Kühlluft zu jeweiligen Auslassöffnungen geführt wird, die in einem den Stator radial umgebenden Gehäuse angeordnet sind und über welche die in den jeweiligen Zwischenraum geblasene Kühlluft aus der elektrischen Maschine ausgeblasen wird.

In einer besonders bevorzugten Ausgestaltung sind diejenigen Auslassöffnungen, durch welche die in einen der Zwischenräume geblasene Kühlluft ausgeblasen wird, zwischen dem anderen Zwischenraum und denjenigen Auslassöffnungen angeordnet, durch welche die in den anderen Zwischenraum geblasene Kühlluft ausgeblasen wird.

Die Kühlung des Stators kann noch weiter dadurch verbessert werden, dass in den Stator Radialausnehmungen eingebracht sind, über welche die Kanäle mit einem Luftspalt zwischen dem Stator und dem Rotor kommunizierend verbunden sind. Durch diese Ausgestaltung kann weiterhin auch der Rotor mit gekühlt werden.

Vorzugsweise ist die elektrische Maschine als geberlose elektrische Maschine ausgebildet. Weiterhin ist die elektrische Maschine vorzugsweise als zweipolige elektrische Maschine ausgebildet.

Die Aufgabe wird weiterhin durch eine kombinierte Turbinen-Generator-Einheit mit den Merkmalen des Anspruchs 22 gelöst. Erfindungsgemäß weist die Gasturbine eine Nenndrehzahl von mindestens 40000 Umdrehungen/min auf. Die Nenndrehzahl kann sogar noch größer sein, beispielsweise bis zu 45000 Umdrehungen/min, bis zu 50000 Umdrehungen/min oder bis zu 55000 Umdrehungen/min betragen. In Einzelfällen sind auch noch höhere Nenndrehzahlen möglich.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1    einen Längsschnitt durch eine elektrische Maschine,

FIG 2    einen Schwingungsverlauf,

FIG 3    einen Querschnitt durch die elektrische Maschine von FIG 1,

FIG 4    eine perspektivische Darstellung der elektrischen Maschine von FIG 1 und

FIG 5    eine kombinierte Turbinen-Generator-Einheit.

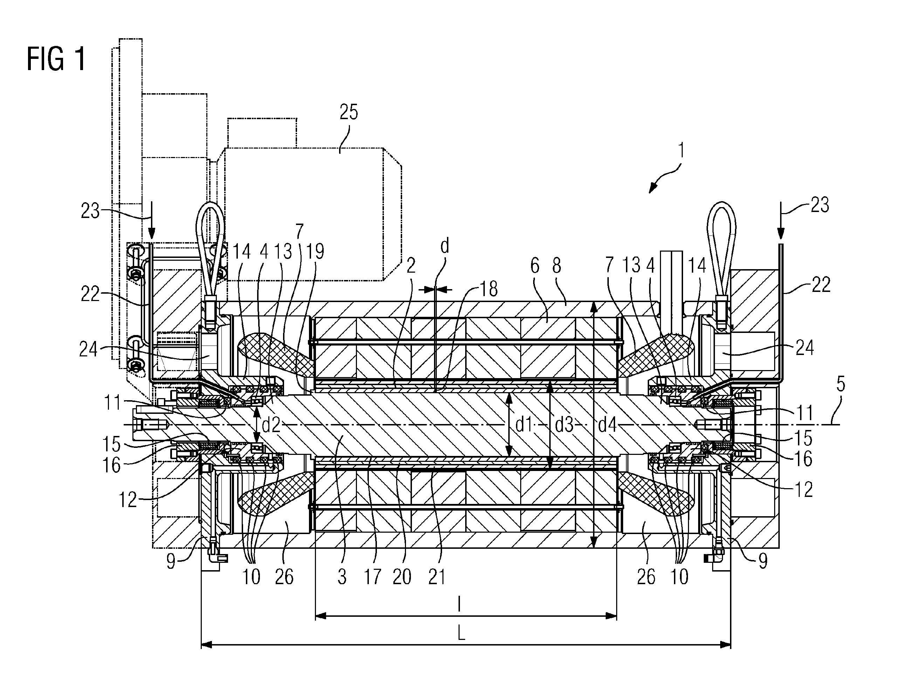

Gemäß FIG 1 weist eine allgemein mit dem Bezugszeichen 1 versehene elektrische Maschine einen Rotor 2 auf. Der Rotor 2 ist drehfest auf einer Rotorwelle 3 angeordnet. Die Rotorwelle 3 ihrerseits ist in Wälzlagern 4 gelagert, so dass sie um eine Rotationsachse 5 rotierbar ist. Die Wälzlager 4 sind gemäß FIG 1 als Kugellager ausgebildet. Dies ist jedoch nicht zwingend erforderlich. Die Wälzlager 4 könnten alternativ beispielsweise als Rollenlager oder als Nadellager ausgebildet sein.

Soweit nachfolgend die Begriffe "axial", "radial" und "tangential" verwendet werden, sind sie stets auf die Rotationsachse 5 bezogen. "Axial" ist eine Richtung parallel zur Rotationsachse 5. "Radial" ist eine Richtung orthogonal zur Rotationsachse 5 direkt auf die Rotationsachse 5 zu oder von ihr weg. "Tangential" ist eine Richtung, die sowohl zur Axialrichtung als auch zur Radialrichtung orthogonal ist. "Tangential" ist also eine Richtung, die bei konstanter Axialposition und in einem konstanten radialen Abstand von der Rotationsachse 5 kreisförmig um die Rotationsachse 5 herum gerichtet ist.

Der Rotor 2 ist radial außen von einem Stator 6 der elektrischen Maschine 1 umgeben. Im Stator 6 ist eine Statorwicklung angeordnet, von der in FIG 1 nur Wicklungsköpfe 7 sichtbar sind, die axial beidseitig des Stators 6 axial über den Stator 7 hinausragen. Der Stator 6 wiederum ist radial außen von einem Gehäuse 8 umgeben. Am Gehäuse 8 sind Lagerschilde 9 angeordnet. Die Lagerschilde 9 sind aufgrund ihrer Anordnung am Gehäuse 8 statorfest angeordnet. Die Wälzlager 4 sind gegenüber den Lagerschild 9 mittels elastischer Zwischenelemente 10, 11 axial und radial elastisch vorgespannt. Die Zwischenelemente 10, 11 können beispielsweise als O-Ringe ausgebildet sein.

Gemäß FIG 1 sind zwischen den Wälzlagern 4 und den Lagerschilden 9 Lagerbuchsen 12 angeordnet. Die Wälzlager 4 sind in den Lagerbuchsen 12 inelastisch angeordnet. Die elastischen Zwischenelemente 10, 11 sind zwischen den Lagerbuchsen 12 und den Lagerschilden 9 angeordnet.

Gemäß FIG 1 sind die Wälzlager 4 (bzw. die Lagerbuchsen 12) jeweils mittels mehrerer elastischer Zwischenelemente 10 radial elastisch vorgespannt. Das Vorhandensein jeweils mehrerer elastischer Zwischenelemente 10 zum Erzeugen der radial elastischen Vorspannung ist bevorzugt. Die axial elastische Vorspannung hingegen wird gemäß FIG 1 jeweils mittels eines einzigen elastischen Zwischenelements 11 bewirkt. Alternativ wäre es jedoch ebenso möglich, auch zum Erzeugen der axial elastischen Vorspannung jeweils mehrere elastische Zwischenelemente 11 vorzusehen.

Die Rotorwelle 3 weist gemäß FIG 1 im Bereich des Rotors 2 einen ersten Wellendurchmesser d1 auf. Der erste Wellendurchmesser d1 kann beispielsweise im Bereich zwischen 50 mm und 100 mm liegen, vorzugsweise im Bereich zwischen 60 mm und 80 mm. Insbesondere kann der erste Wellendurchmesser d1 beispielsweise bei ca. 70 mm liegen Im Bereich der Wälzlager 4 hingegen weist die Rotorwelle 3 einen zweiten Wellendurchmesser d2 auf, der kleiner als der erste Wellendurchmesser d1 ist. Die Rotorwelle 3 verjüngt sich daher in Übergangsabschnitten 13 vom ersten Wellendurchmesser d1 auf den zweiten Wellendurchmesser d2. Der zweite Wellendurchmesser d2 kann beispielsweise zwischen 35% und 65% des ersten Wellendurchmessers d1 liegen, vorzugsweise zwischen 40% und 60%, insbesondere zwischen 45% und 55%.

Die Übergangsabschnitte 13 können gestuft sein. Alternativ können sie entsprechend der Darstellung in FIG 1 konisch verlaufen.

Die Übergangsabschnitte 13 können nach Bedarf angeordnet sein. Insbesondere können sie entsprechend der Darstellung in FIG 1 in Axialrichtung gesehen im Bereich der Wicklungsköpfe 7 angeordnet sein.

Die Lagerschilde 9 weisen vorzugsweise ringartige Vorsprünge 14 auf, die sich in Axialrichtung gesehen auf den Stator 6 zu erstrecken. Die Lagerbuchsen 12 können in diesem Fall in den ringartigen Vorsprüngen 14 angeordnet sein. Je nachdem, wie weit die ringartigen Vorsprünge 14 sich in Axialrichtung auf den Stator 6 zu erstrecken, ist es sogar möglich, dass die Wälzlager 4 entsprechend der Darstellung in FIG 1 in Axialrichtung gesehen im Bereich der Wicklungsköpfe 7 angeordnet sind.

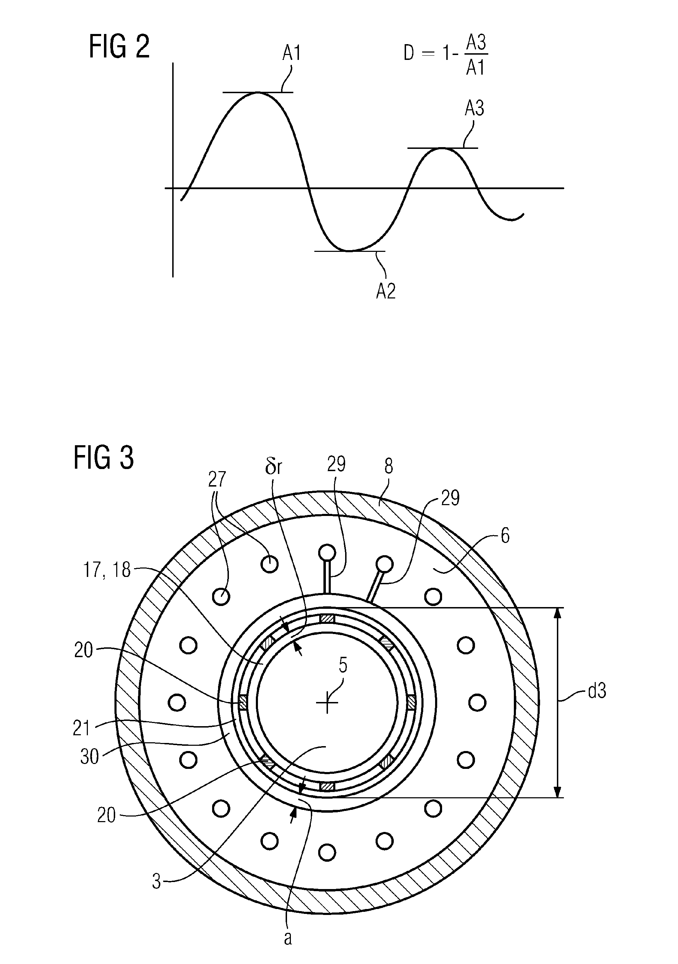

Im Ruhezustand - also bei stehender Rotorwelle 3 - ist der Rotor 2 in Radialrichtung gesehen in der Regel relativ zum Stator 6 zentriert. Der Rotor 2 weist daher - siehe FIG 3 - einen radialen Abstand a vom Stator 6 auf, der sowohl in Axialrichtung gesehen als auch in Tangentialrichtung gesehen konstant ist. Im Betrieb - also bei rotierender Rotorwelle 3 - ist diese Bedingung jedoch nicht stets erfüllt. Insbesondere können Schwingungen auftreten, so dass Rotorwelle 3 in den Wälzlagern 4 oszilliert. Die Schwingungen in den Wälzlagern 4 weisen in der Regel zwar dieselbe Frequenz auf, können jedoch einen Phasenversatz zwischen 0° und 360° aufweisen. Sofern eine Amplitude der Schwingungen einen Maximalwert übersteigt, besteht die Gefahr, dass der - mit hoher Drehzahl rotierende - Rotor 2 den Stator 6 berührt. Eine derartige Berührung hätte die sofortige Zerstörung der elektrischen Maschine 1 zur Folge.

Um eine derartige Berührung mit Sicherheit zu vermeiden, sind - zusätzlich zu den Wälzlagern 4 - in den Lagerschilden 9 Fanglager 15 angeordnet. Die Fanglager 15 sind bezüglich der Lagerschilde 9 zumindest radial inelastisch angeordnet. Meist sind die Fanglager 15 bezüglich der Lagerschilde 9 auch axial inelastisch angeordnet. Die Fanglager 15 sind während des normalen Betriebs der elektrischen Maschine 1 nicht aktiv. Sofern jedoch eine Verkippung und/oder ein Versatz der Rotorwelle 3 relativ zur Rotationsachse 5 auftreten und einen Maximalwert erreichen, werden die Fanglager 15 aktiv. Die Fanglager 15 begrenzen dadurch die Verkippung und den Versatz der Rotorwelle 3 auf den jeweiligen Maximalwert. Die Fanglager 15 sind derart ausgelegt (d.h. die Maximalwerte entsprechend bestimmt), dass der Rotor 2 auch bei der maximalen Verkippung und auch bei dem maximalen Versatz vom Stator 6 beabstandet bleibt.

Die Fanglager 15 sind gemäß FIG 1 in Fanglagerhalterungen 16 angeordnet. Sofern die Fanglager 15 mittels der Fanglagerhalterungen 16 bezüglich der Lagerschilde 9 zusätzlich auch axial inelastisch gehalten sind, sind die Wälzlager 4 vorzugsweise gegen die Fanglagerhalterungen 16 axial vorgespannt.

Aufgrund der elastischen Vorspannung der Wälzlager 4 (bzw. der Lagerbuchsen 12) werden Schwingungen der Wälzlager 4 gedämpft. Die Schwingungen werden in der Regel umso stärker gedämpft, je stärker die Wälzlager 4 (bzw. die Lagerbuchsen 12) vorgespannt sind. Die elastische Vorspannung kann gemäß FIG 2 insbesondere derart bestimmt sein, dass eine Dämpfung D von mindestens 0,15 erreicht wird. Vorzugsweise beträgt die Dämpfung D sogar mindestens 0,20, insbesondere mindestens 0,25.

Die Dämpfung D ergibt sich gemäß FIG 2 durch die Abnahme der Elongation der gedämpften Schwingung. Wenn der Maximalwert der Elongation zwischen zwei Nulldurchgängen der Schwingung einen ersten Maximalwert A1 erreicht, zwischen dem zeitlich späteren der beiden vorgenannten Nulldurchgänge und dem nächsten Nulldurchgang einen zweiten Maximalwert A2 erreicht und zwischen dem zeitlich späteren der beiden zuletzt genannten Nulldurchgänge und dem nächsten Nulldurchgang einen dritten Maximalwert A3 erreicht, so ist die Dämpfung D gegeben durch die Beziehung

$$D = 1 - A3/A1.$$

Die Dämpfung D ist somit auf eine Schwingungsperiode einer axialen und/oder radialen Schwingung bezogen.

Die mögliche Leistungsausbeute der elektrischen Maschine 1 steigt mit einem Außendurchmesser d3 des Rotors 2. Mit steigendem Außendurchmesser d3 des Rotors 2 steigen jedoch auch auf den Rotor 2 wirkende Zentrifugalkräfte. Der Außendurchmesser d3 des Rotors 2 sollte daher optimal gewählt werden. Weiterhin ist die mögliche Leistungsausbeute der elektrischen Maschine 1 proportional zu einer Länge 1 des Rotors 2. Es hat sich als vorteilhaft erwiesen, dass ein Verhältnis der Länge 1 zum Außendurchmesser d3 mindestens 3:1 beträgt. Die Länge 1 sollte also mindestens das Dreifache des Außendurchmessers d3 betragen. Vorzugsweise beträgt sie sogar mindestens das Vierfache. Das Fünffache sollte jedoch nicht überschritten werden.

Der Rotor 2 umfasst gemäß den FIG 1 und 3 ein Rotorblechpaket 17. Das Rotorblechpaket 17 besteht aus einer Vielzahl von Rotorblechen 18. Die Rotorbleche 18 sind axial aufeinander gestapelt und kreisringförmig ausgebildet. Das Rotorblechpaket 17 weist radial eine Radialerstreckung $\delta r$ auf. Die Radialerstreckung $\delta r$ liegt vorzugsweise zwischen 5 % und 10 % des ersten Wellendurchmessers d1.

Die Rotorbleche 18 sind - in Axialrichtung gesehen - vorzugsweise relativ dünn. Insbesondere weisen sie gemäß FIG 1 vorzugsweise eine Dicke d von maximal 0,25 mm auf. Beispielsweise kann die Dicke d maximal 0,20 mm betragen, insbesondere maximal 0,15 mm.

Das Rotorblechpaket 17 wird vorzugsweise auf die Rotorwelle 3 aufgeschrumpft. Zum einfachen und exakten Positionieren des Rotorblechpakets 17 beim Aufschrumpfen weist die Rotorwelle 3 vorzugsweise einen Vorsprung 19 auf. In diesem Fall kann das Rotorblechpaket 17 bis zum Vorsprung 19 auf die Rotorwelle 3 aufgeschoben und dort gehalten werden, bis der Aufschrumpfvorgang beendet ist. Aufgrund des Aufschiebens des Rotorblechpakets 17 grenzt ein Ende des Rotorblechpakets 17 axial an den Vorsprung 19 an. Am anderen Ende des Rotorblechpakets 17 weist die Rotorwelle 3 selbstverständlich keinen derartigen Vorsprung auf, da anderenfalls das Aufschieben des Rotorblechpakets 17 nicht möglich wäre.

Gemäß FIG 3 sind auf der radialen Außenseite des Rotorblechpakets 17 Permanentmagnete 20 angeordnet. Das Rotorblechpaket 17 und die Permanentmagnete 20 sind - siehe auch FIG 1 - wiederum vorzugsweise radial außen von einer Hülle 21 umgeben. Die Hülle 21 besteht vorzugsweise aus einem faserverstärkten Kunststoff.

Im Betrieb der elektrischen Maschine 1 werden die Wälzlager 4 vorzugsweise gekühlt und/oder geschmiert. Zu diesem Zweck wird den Wälzlagern 4 gemäß FIG 1 über eine jeweilige Zuleitung 22 ein Öl-Luft-Gemisch 23 zugeführt. Dadurch kann insbesondere eine sogenannte Sprühnebelkühlung realisiert werden. Eine Temperaturdifferenz zwischen den Lagerinnenringen der Wälzlager 4 und den Lageraußenringen der Wälzlager 4 kann dadurch auf wenige °C beschränkt werden, insbesondere auf 10 °C und weniger.

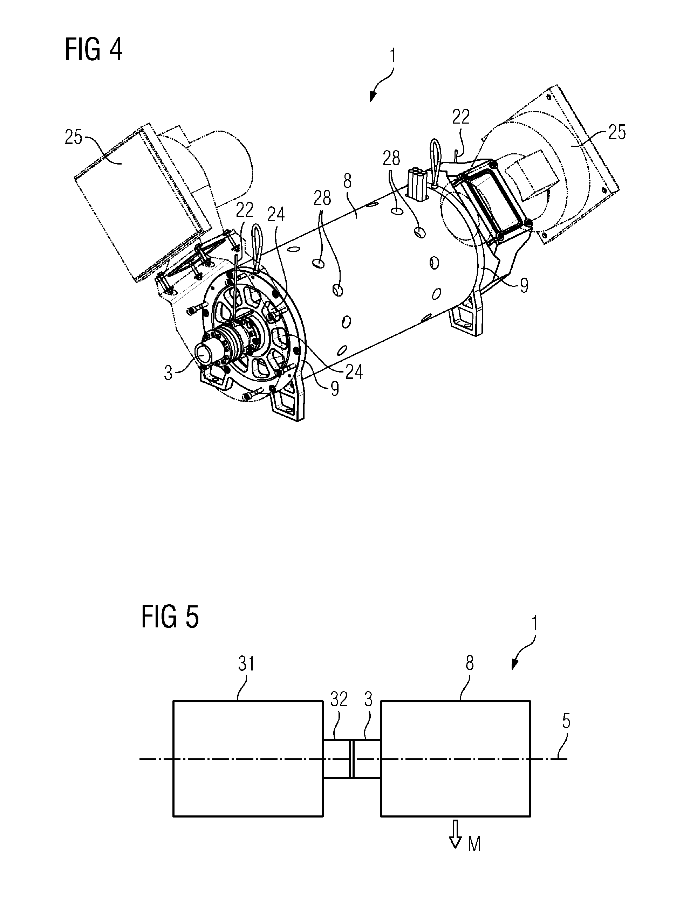

Wie aus den FIG 1 und 4 erkennbar ist, weisen die Lagerschilde 9 Öffnungen 24 auf. Durch die Öffnungen 24 hindurch wird über Gebläse 25 von außen Kühlluft in einen jeweiligen Zwischenraum 26 zwischen dem jeweiligen Lagerschild 9 und dem Stator 6 geblasen. Weiterhin weist der Stator 6 (siehe FIG 3) axial verlaufende Kanäle 27 auf. Die Kühlluft wird durch die Kanäle 27 hindurch zu jeweiligen Auslassöffnungen 28 geführt, die im Gehäuse 8 angeordnet sind. Über die Auslassöffnungen 28 wird die in den jeweiligen Zwischenraum 26 geblasene Kühlluft aus der elektrischen Maschine 1 ausgeblasen.

Die Kanäle 27 erstrecken sich, ausgehend von dem jeweiligen Zwischenraum 26, bis über die Mitte des Stators 6 hinaus. In Axialrichtung gesehen sind folglich diejenigen Auslassöffnungen 28, durch welche die in den einen Zwischenraum 26 geblasene Kühlluft ausgeblasen wird, entsprechend der Darstellung in FIG 4 zwischen dem anderen Zwischenraum 26 und denjenigen Auslassöffnungen 28 angeordnet, durch welche die in den anderen Zwischenraum 26 geblasene Kühlluft ausgeblasen wird.

Durch die obenstehend erläuterte Ausgestaltung werden die Wicklungsköpfe 7, der Stator 6 und auch die Lagerbuchsen 12 effizient gekühlt. Eine Kühlung des Rotors 2 erfolgt nur indirekt. Falls eine verbesserte Kühlung des Stators 6 und/oder eine Kühlung des Rotors 2 erforderlich ist, können in den Stator 6 entsprechend der Darstellung in FIG 3 zusätzlich Radialausnehmungen 29 eingebracht sein. Über die Radialausnehmungen 29 sind die Kanäle 27 mit einem Luftspalt 30 kommunizierend verbunden. Der Luftspalt 30 ist zwischen dem Stator 6 und dem Rotor 2 ausgebildet.

Die erfindungsgemäße elektrische Maschine 1 ist für Leistungsanwendungen bestimmt. Sie ist daher sowohl bezüglich ihrer Abmessungen als auch bezüglich ihrer Nennleistung als auch bezüglich ihrer Masse M (siehe FIG 5) nicht mit einem Mikromotor vergleichbar. Beispielsweise liegt eine Länge L der elektrischen Maschine in der Regel bei mindestens 50 cm, oftmals bei 70 cm und mehr. Auch eine Länge L von 1 m und mehr ist durchaus möglich. Auch ein Gehäusedurchmesser d4 liegt in der Regel bei mindestens 15 cm, oftmals bei 20 cm und mehr. Auch ein Gehäusedurchmesser d4 von 25 cm oder 30 cm oder noch mehr ist durchaus möglich. Eine Nennleistung der elektrischen Maschine 1 liegt oftmals im zwei- oder dreistelligen Kilowattbereich, insbesondere bei mindestens 50 kW, mindestens 100 kW oder mindestens 200 kW. Auch eine Nennleistung von 1 MW und mehr ist möglich. Dementsprechend ist auch die Masse M nennenswert. Sie liegt in der Regel im Bereich zwischen mindestens 6 kg für eine kleine Nennleistung von beispielsweise 30 kW und bis zu 250 kg bei einer großen Nennleistung oberhalb von 1 MW.

FIG 5 zeigt eine bevorzugte Verwendung der erfindungsgemäßen elektrischen Maschine, nämlich im Rahmen einer kombinierten Turbinen-Generator-Einheit. Gemäß FIG 5 weist die Turbinen-Generator-Einheit eine Gasturbine 31 auf, die ihrerseits eine Turbinenwelle 32 aufweist. Die Turbinen-Generator-Einheit weist weiterhin eine elektrische Maschine 1 auf. Die elektrische Maschine 1 ist so wie obenstehend erläutert ausgebildet. Die Gasturbine 31 ist eine relativ kleine, dafür aber sehr hochtourig laufende Gasturbine 31. Insbesondere weist sie eine Nenndrehzahl von mindestens 40000 Umdrehungen/min auf. Sie kann auch eine noch höhere Nenndrehzahl aufweisen, beispielsweise mindestens 45000 Umdrehungen/min, mindestens 50000 Umdrehungen/min oder sogar bis zu 55000 Umdrehungen/min. Die Turbinenwelle 32 ist direkt - also ohne Zwischenschaltung eines Getriebes - mit der Rotorwelle 3 der elektrischen Maschine 1 drehfest verbunden. Die Turbinenwelle 32 und die Rotorwelle 3 rotieren dadurch stets mit derselben Drehzahl.

Die elektrische Maschine 1 wird im Rahmen der bevorzugten Verwendung von FIG 5 nur in einem einzigen Betriebspunkt (nämlich bei Nenndrehzahl oder zumindest in der Nähe der Nenndrehzahl) betrieben. Sie kann daher als geberlose elektrische Maschine 1 ausgebildet sein. Weiterhin hatte sich insbesondere beim Betrieb der elektrischen Maschine 1 mit hohen Drehzahlen als vorteilhaft herausgestellt, die elektrische Maschine 1 als zweipolige elektrische Maschine 1 auszubilden.

Zusammengefasst betrifft die vorliegende Erfindung eine elektrische Maschine 1, die einen Rotor 2 aufweist, der drehfest auf einer Rotorwelle 3 angeordnet ist. Die Rotorwelle 3 ist in Wälzlagern 4 gelagert, so dass sie um eine Rotationsachse 5 rotierbar ist. Der Rotor 2 ist radial außen von einem Stator 6 der elektrischen Maschine umgeben. Die Wälzlager 4 sind gegenüber statorfest angeordneten Lagerschilden 9 mittels elastischer Zwischenelemente 10, 11 axial und radial elastisch vorgespannt.

Die erfindungsgemäße elektrische Maschine 1 weist viele Vorteile auf. Insbesondere bietet die elektrische Maschine 1 ein hohes Leistungsgewicht (mehr als 5 kW/kg) und kann auch im Dauerbetrieb bei sehr hohen Drehzahlen (40000 Umdrehungen/min und mehr) betrieben werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Elektrische Maschine,

   - wobei die elektrische Maschine einen Rotor (2) aufweist, der drehfest auf einer Rotorwelle (3) angeordnet ist,

- wobei die Rotorwelle (3) in Wälzlagern (4) gelagert ist, so dass die Rotorwelle (3) um eine Rotationsachse (5) rotierbar ist,

- wobei der Rotor (2), bezogen auf die Rotationsachse (5), radial außen von einem Stator (6) der elektrischen Maschine umgeben ist,

- wobei die Wälzlager (4) gegenüber statorfest angeordneten Lagerschilden (9), bezogen auf die Rotationsachse (5), mittels elastischer Zwischenelemente (10, 11) axial und radial elastisch vorgespannt sind.

2. Elektrische Maschine nach Anspruch 1, **dadurch gekennzeichnet , dass** zwischen den Wälzlagern (4) und den Lagerschilden (9) Lagerbuchsen (12) angeordnet sind und dass die elastischen Zwischenelemente (10,11) zwischen den Lagerbuchsen (12) und den Lagerschilden (9) angeordnet sind.

3. Elektrische Maschine nach Anspruch 1 oder 2, **dadurch gekennzeichnet, dass** die Wälzlager (4) jeweils mittels mehrerer elastischer Zwischenelemente (10) radial elastisch vorgespannt sind und jeweils mittels mindestens eines elastischen Zwischenelements (11) axial elastisch vorgespannt sind.

4. Elektrische Maschine nach Anspruch 1, 2 oder 3, **dadurch gekennzeichnet, dass** die Rotorwelle (3) im Bereich des Rotors (2) einen ersten Wellendurchmesser (d1) aufweist und dass die Rotorwelle (3) sich zu den Wälzlagern (4) hin in Übergangsabschnitten (13) auf einen zweiten Wellendurchmesser (d2) verjüngt.

5. Elektrische Maschine nach Anspruch 4, **dadurch gekennzeichnet, dass** im Stator (6) eine Statorwicklung angeordnet ist, die axial beidseitig des Stators (6) je einen über den Stator (6) hinausragenden Wicklungskopf (7) aufweist, und dass die Übergangsabschnitte (13) im Bereich der Wicklungsköpfe (7) angeordnet sind.

6. Elektrische Maschine nach Anspruch 5, **dadurch gekennzeichnet, dass** die Wälzlager (4) im Bereich der Wicklungsköpfe (7) angeordnet sind.

7. Elektrische Maschine nach einem der obigen Ansprüche, **dadurch gekennzeichnet , dass** in den Lagerschilden (9) zusätzlich zu den Wälzlagern (4) Fanglager (15) angeordnet sind, die bezüglich der Lagerschilde (9) zumindest radial inelastisch angeordnet sind, dass die Fanglager (15) eine Verkippung und einen Versatz der Rotorwelle (3) auf einen jeweiligen Maximalwert begrenzen und dass die Fanglager (15) derart ausgelegt sind, dass der Rotor (2) auch bei der maximalen Verkippung und auch bei dem maximalen Versatz vom Stator (6) beabstandet bleibt.

8. Elektrische Maschine nach Anspruch 7, **dadurch gekennzeichnet, dass** die Fanglager (15) in Fanglagerhalterungen (16) angeordnet sind und dass die Wälzlager (4) gegen die Fanglagerhalterungen (16) axial vorgespannt sind.

9. Elektrische Maschine nach einem der obigen Ansprüche, **dadurch gekennzeichnet, dass** die elastische Vorspannung der Wälzlager (4) derart bestimmt ist, dass - bezogen auf eine Schwingungsperiode einer axialen und/oder radialen Schwingung - eine Dämpfung (D) von mindestens 0,15 erreicht wird.

10. Elektrische Maschine nach einem der obigen Ansprüche, **dadurch gekennzeichnet, dass** der Rotor (2) einen Außendurchmesser (d3) und eine Länge (1) aufweist und dass ein Verhältnis der Länge (1) zum Außendurchmesser (d3) mindestens 3:1 beträgt.

11. Elektrische Maschine nach einem der obigen Ansprüche, **dadurch gekennzeichnet, dass** der Rotor (2) ein Rotorblechpaket (17) umfasst, das aus einer Vielzahl von axial zur Rotationsachse (5) aufeinander gestapelten, kreisringförmig ausgebildeten Rotorblechen (18) besteht, und dass das Rotorblechpaket (17) radial zur Rotationsachse (5) gesehen eine Radialerstreckung ($\delta r$) aufweist.

12. Elektrische Maschine nach Anspruch 11, **dadurch gekennzeichnet, dass** die Radialerstreckung ($\delta r$) des Rotorblechpakets (17) zwischen 5% und 10% eines ersten Wellendurchmessers (d1) liegt, welchen die Rotorwelle (3) im Bereich des Rotorblechpakets (17) aufweist.

13. Elektrische Maschine nach Anspruch 11 oder 12, **dadurch gekennzeichnet, dass** die Rotorbleche (18) in Richtung der Rotationsachse (5) gesehen eine Dicke (d) von maximal 0,25 mm aufweisen.

14. Elektrische Maschine nach Anspruch 11, 12 oder 13, **dadurch gekennzeichnet, dass** die Rotorwelle (3) einen Vorsprung (19) aufweist, der an einem Ende des Rotorblechpakets (17) axial an das Rotorblechpaket (17) angrenzt, und dass die Rotorwelle (3) am anderen Ende des Rotorblechpakets (17) keinen derartigen Vorsprung aufweist.

15. Elektrische Maschine nach einem der Ansprüche 11 bis 14, **dadurch gekennzeichnet, dass** auf der radialen Außenseite des Rotorblechpakets (17) Permanentmagnete (20) angeordnet sind und dass der Rotor (2) eine das Rotorblechpaket (17) und die Permanentmagnete (20) radial außen umgebende Hülle (21) aus einem faserverstärkten Kunststoff aufweist.

**16.** Elektrische Maschine nach einem der obigen Ansprüche, **dadurch gekennzeichnet, dass** den Wälzlagern (4) über eine jeweilige Zuleitung (22) zur Schmierung und/oder Kühlung der Wälzlager (4) ein Öl-Luft-Gemisch (23) zugeführt wird.

**17.** Elektrische Maschine nach einem der obigen Ansprüche, **dadurch gekennzeichnet,**

- **dass** die Lagerschilde (9) Öffnungen (24) aufweisen, durch die hindurch Kühlluft von außen in einen jeweiligen Zwischenraum (26) zwischen dem jeweiligen Lagerschild (9) und dem Stator (6) geblasen wird, und
- **dass** der Stator (6) axial zur Rotationsachse (5) verlaufende jeweilige Kanäle (27) aufweist, durch die hindurch die in den jeweiligen Zwischenraum (26) geblasene Kühlluft zu jeweiligen Auslassöffnungen (28) geführt wird, die in einem den Stator (6) radial umgebenden Gehäuse (8) angeordnet sind und über welche die in den jeweiligen Zwischenraum (26) geblasene Kühlluft aus der elektrischen Maschine ausgeblasen wird.

**18.** Elektrische Maschine nach Anspruch 17, **dadurch gekennzeichnet, dass** diejenigen Auslassöffnungen (28), durch welche die in einen der Zwischenräume (26) geblasene Kühlluft ausgeblasen wird, zwischen dem anderen Zwischenraum (26) und denjenigen Auslassöffnungen (28) angeordnet, durch welche die in den anderen Zwischenraum (26) geblasene Kühlluft ausgeblasen wird.

**19.** Elektrische Maschine nach Anspruch 17 oder 18, **dadurch gekennzeichnet, dass** in den Stator (6) Radialausnehmungen (29) eingebracht sind, über welche die Kanäle (27) mit einem Luftspalt (30) zwischen dem Stator (6) und dem Rotor (2) kommunizierend verbunden sind.

**20.** Elektrische Maschine nach einem der obigen Ansprüche, **dadurch gekennzeichnet, dass** sie als geberlose elektrische Maschine ausgebildet ist.

**21.** Elektrische Maschine nach einem der obigen Ansprüche, **dadurch gekennzeichnet , dass** sie als zweipolige elektrische Maschine ausgebildet ist.

**22.** Kombinierte Turbinen-Generator-Einheit,

- wobei die Turbinen-Generator-Einheit eine Gasturbine (31) mit einer Turbinenwelle (32) und eine elektrische Maschine (1) nach einem der obigen Ansprüche aufweist,
- wobei die Gasturbine (31) eine Nenndrehzahl von mindestens 40000 Umdrehungen/min aufweist,

- wobei die Turbinenwelle (32) direkt mit der Rotorwelle (3) der elektrischen Maschine (1) drehfest verbunden ist, so dass die Turbinenwelle (32) und die Rotorwelle (3) stets mit derselben Drehzahl rotieren.

FIG 1

FIG 2

$$D = 1 - \frac{A3}{A1}$$

A1

A3

A2

FIG 3

27   δr   29   8   29   6

17, 18

20

21

30

20

3

5

a

d3

FIG 4

FIG 5

Europäisches
Patentamt

European
Patent Office

Office européen
des brevets

## EUROPÄISCHER RECHERCHENBERICHT

Nummer der Anmeldung

EP 13 17 6314

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2011/144323 A1 (EPPENDORF AG [DE]; KOEHN HEINZ-GERNHARD [DE]; ZEHNEL PETER [DE]) 24. November 2011 (2011-11-24) | 1-6, 9-15, 20-22 | INV. H02K5/173 H02K5/20 H02K5/24 |
| Y | * das ganze Dokument * | 7,8, 16-19 | |
| Y | ----- WO 2007/124982 A2 (SIEMENS AG [DE]; PETEREIT PETER [DE]; SCHUBERT GUNNAR [DE]; SIEGL GUEN) 8. November 2007 (2007-11-08) * Zusammenfassung * | 7,8 | |
| Y | ----- US 3 264 503 A (ERWIN WIEDEMANN) 2. August 1966 (1966-08-02) * Zusammenfassung * * Spalte 3, Zeile 52 - Zeile 54 * | 16 | |
| Y | ----- EP 2 602 916 A1 (HAMILTON SUNDSTRAND SPACE SYS [US]) 12. Juni 2013 (2013-06-12) * Zusammenfassung * ----- | 17-19 | |

RECHERCHIERTE SACHGEBIETE (IPC)

H02K

Der vorliegende Recherchenbericht wurde für alle Patentansprüche erstellt

| Recherchenort | Abschlußdatum der Recherche | Prüfer |
|---|---|---|
| Den Haag | 12. Februar 2014 | Brans, Tim |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 17 6314

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-02-2014

| Im Recherchenbericht angeführtes Patentdokument | Datum der Veröffentlichung | Mitglied(er) der Patentfamilie | Datum der Veröffentlichung |
|---|---|---|---|
| WO 2011144323 A1 | 24-11-2011 | CN 102918752 A<br>DE 102010020912 A1<br>EP 2572437 A1<br>JP 2013528343 A<br>US 2013293039 A1<br>WO 2011144323 A1 | 06-02-2013<br>24-11-2011<br>27-03-2013<br>08-07-2013<br>07-11-2013<br>24-11-2011 |
| WO 2007124982 A2 | 08-11-2007 | DE 102006019873 B3<br>DK 2013500 T3<br>EP 2013500 A2<br>ES 2410863 T3<br>US 2009091203 A1<br>WO 2007124982 A2 | 18-10-2007<br>26-08-2013<br>14-01-2009<br>03-07-2013<br>09-04-2009<br>08-11-2007 |
| US 3264503 A | 02-08-1966 | KEINE | |
| EP 2602916 A1 | 12-06-2013 | KEINE | |

EPO FORM P0461

Für nähere Einzelheiten zu diesem Anhang : siehe Amtsblatt des Europäischen Patentamts, Nr.12/82